# EUROPEAN PATENT APPLICATION

(11) **EP 4 393 865 A1**
(43) Date of publication of application: **03.07.2024**
(21) Application number: 23219166.8
(22) Date of filing: 21.12.2023
(51) Int. Cl.: B66F 9/065, B60L 50/75, B60L 53/65, B60L 53/80, B66F 9/075, B66F 9/24, B60K 6/42, B60K 6/22

(54) **TELEHANDLER WITH AUTOMATIC RECOGNITION OF ENERGY SOURCES**

(30) Priority: 27.12.2022 IT 202200026838
(71) Applicant: Manitou Italia S.r.l., 41013 Castelfranco Emilia (Modena) (IT)
(72) Inventor: IOTTI, Marco, 42123 REGGIO EMILIA (IT)
(74) Representative: Gagliardelli, Fabrizio

(57) **Abstract**

Described is a telehandler (1) equipped with at least one electric motor and seats (100) for housing energy sources (200, 300) on board the telehandler (1); wherein an electric battery (200) is provided for powering the motor designed to be housed in one of the seats (100); and wherein an electricity generator apparatus (300) is provided designed to be housed in one of the seats (100). The telehandler (1) comprises recognition means configured for automatically recognising whether a battery (200) or an electricity generator apparatus (300) is present in a seat (100)

## Description

This invention relates to a telehandler with convertible propulsion of improved type.

In detail, the invention relates to a telehandler with a propulsion that can be switched from electric to hybrid and vice versa, wherein the energy source is recognised automatically by the control unit.

There are prior art electric telehandlers, equipped with an electric motor, powered by one or more batteries, in place of the traditional internal combustion engine, which have the advantage of not diffusing exhaust gas in the environments in which they work.

The environmental regulations of many countries require the use of electric telehandlers instead of those with a fossil fuel power supply if works are to be performed in closed environments, such as industrial sheds, or in zones of residential centres where restrictions apply to the traffic and to the type of vehicles allowed to circulate, such as town centres.

However, the use of prior art electric telehandlers had some limitations linked mainly to the autonomy and the availability of battery recharging sources.

These limitations are overcome by a convertible hybrid / electric telehandler described in European patent application No. 22181031, in the name of the same Applicant as this invention.

The technical purpose which forms the basis of the invention is to provide a telehandler with a switchable power supply improved in terms of ease of use, safety and productivity.

The technical purpose specified is achieved by the telehandler made according to the appended claims.

Further features and advantages of the present invention are more apparent in the non-limiting description of a preferred embodiment of the proposed telehandler, as illustrated in the accompanying drawings, in which:

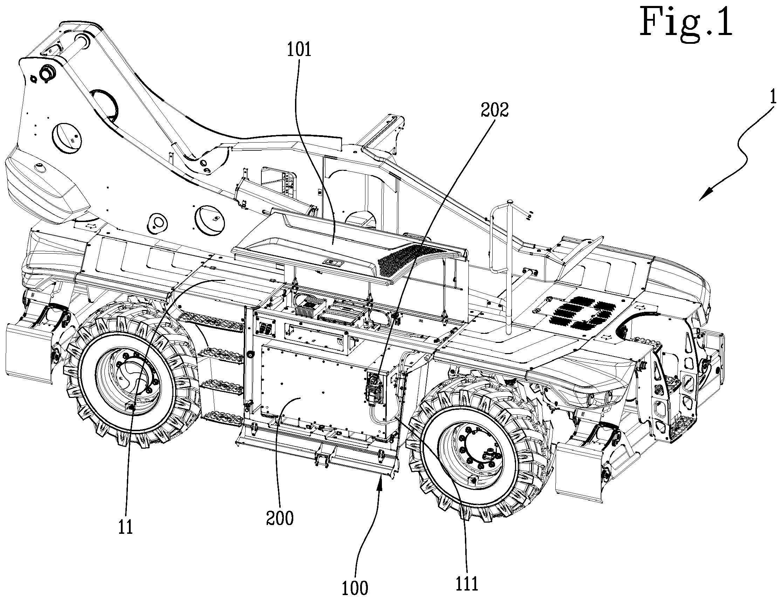

- Figure 1 is a side view of a telehandler according to the invention, wherein the arm and the cab are not shown, in an operating condition wherein it has a battery on board;

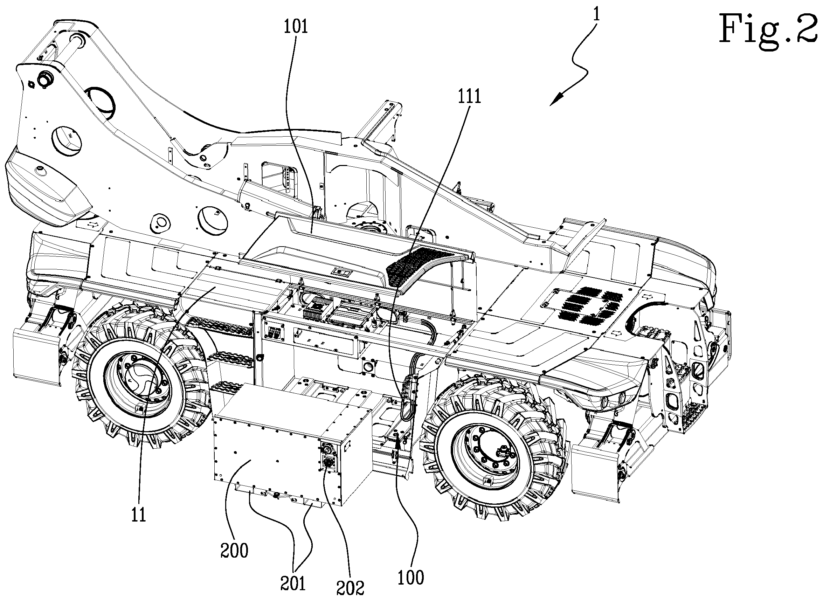

- Figure 2 is the view of Figure 1, where the battery is extracted from the containment compartment;
- Figure 3 is a view like the previous ones, wherein the compartment is shown empty;
- Figure 4 is a view like the previous ones, wherein the compartment houses a diesel-electric generator; and
- Figures 5 and 6 are diagrams which show two configurations of use of a high voltage system of the telehandler.

With reference to the first drawing, the numeral 1 denotes in its entirety an electrically powered or hybrid telehandler according to the invention.

The telehandler 1 proposed is equipped with a frame 11, or "carriage", movable on wheels and may be either fixed or rotary, that is to say, it can mount the cab and the operating arm directly on the carriage 11 or, as in the case illustrated, may be equipped with a platform, or "turret", mounted rotatably on the carriage 11, which supports the cab and operating arm. The telehandler 1 according to the invention may comprise at least one electric drive motor, for example positioned at one of the axles and an electric motor for driving the hydraulic pump which powers, using a distributor, the movement cylinders of the arm and, if necessary, the motor-driven rack of the turret. According to possible variant, there is a single electric motor which powers a hydraulic system which drives both the transmission and therefore the traction of the machine 1 and the above-mentioned hydraulic pump. In any case, it is envisaged that there is at least one electric motor.

The telehandler 1 is advantageously equipped with a plurality of housing seats, for example in the form of containment compartments 100, designed for the energy sources 200, 300 which, considered as a whole, electrically power at least the propulsion motor and the pump motor.

Preferably, the carriage 11 of the telehandler can define two lateral compartments 100, made in its opposite lateral portions, right and left, accessible on opposite sides, each of which is designed to house the above-mentioned energy sources 200, 300.

At least one of the compartments 100 is provided with an access opening to allow a user to insert or extract, and in particular replace, the above-mentioned energy sources 200, 300.

More in detail, the access opening of the compartment or compartments 100 may be positioned on a relative side of the carriage 11, facing towards the outside, thereby allowing an insertion and an extraction of the energy sources 200, 300.

The opening may be equipped with a door 101, or "hood", to allow access to the compartment 100 from the outside; the door 101 may be of the tilting type and equipped with a lock.

Reference will be made below to the preferential case wherein the housing seats consist of two compartments 100 made in the carriage 11 of the telehandler 1 but what will be said with regard to this example also applies for different embodiments.

The invention comprises two types of electricity supply sources: electric batteries 200 and electricity generator apparatuses 300.

In detail, the invention uses one or more electric batteries 200, each designed to be inserted/extracted in/from one of the compartments 100 and at least one electricity generator apparatus 300 designed to be inserted/extracted in/from one of the compartments 100.

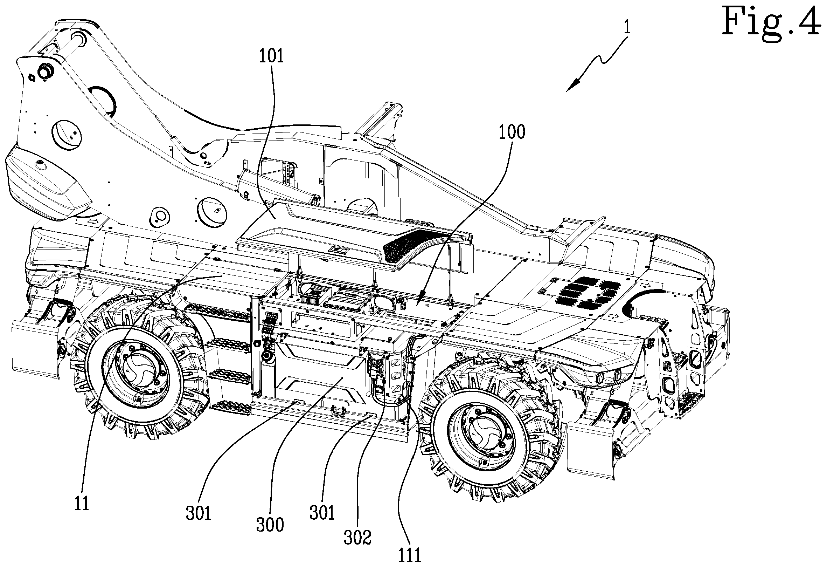

The electricity generator apparatus 300 may be designed for producing electricity by consuming fossil fuel, for example it may be a so-called "diesel-electric generator", as illustrated in Figure 4, or it may be a fuel cell or other apparatus which, starting from some form of fuel, produces electricity. According to an important aspect of the invention, the telehandler 1 is provided with two alternative power supply configurations, which can be switched by the action of a user:
- a fully electrical configuration wherein the power supply means include only one or more electric batteries 200; and
- a hybrid configuration wherein the above-mentioned power supply means include the electricity generator apparatus 300.

In the fully electrical configuration, the energy sources which are on board the telehandler 1 include at least one battery 200 but not electricity generator apparatuses 300, whilst in the hybrid configuration they include at least one electricity generator apparatus 300. More in detail, if two compartments 100 are provided, the first electric configuration may comprise both the case in which in only one of the two compartments 100 there is a battery 200 and the case in which there is a respective battery 200 in both the compartments.

Preferably, in the hybrid configuration, the power supply means include an electric battery 200 which supplies the propulsion motor 21, connected to the transmission and the motor 22 which drives the pump and an electricity generator apparatus 300 set up for charging the battery 200. According to possible variant, there is a single electric motor which powers a hydraulic system which drives both the transmission and therefore the traction of the machine 1 and the above-mentioned hydraulic pump.

For this reason, in order to switch from the hybrid configuration to the fully electrical configuration it may also be sufficient to remove from the telehandler 1 the electricity generator apparatus 300 and to switch from the fully electrical configuration to the hybrid configuration it is always necessary to insert the electricity generator apparatus 300 into one of the compartments.

More in detail, the telehandler according to the invention is preferably equipped with three operating conditions, two of which correspond to the fully electric configuration whilst the other corresponds to the hybrid configuration:
- according to a first operating condition, the telehandler has on board a single battery 200 which powers the motors 21, 22;
- according to a second operating condition, the telehandler has on board two batteries 200;
- according to the third operating condition, the telehandler has on board both the battery 200 which powers the motors and the electricity generator apparatus 300 which constitutes the range extender.

It should be noted that each compartment 100 can receive without distinction any energy source 200, 300 for the purposes of their connection to the electrical system of the telehandler 1, and any energy source can be received without distinction in any compartment 100.

According to an important aspect of the invention, recognition means are provided which are configured to recognise whether a battery 200 is present in each compartment or an electricity generator apparatus 300 is present, as well as the case wherein nothing is housed in the compartment 100.

In practice, the recognition means are able to distinguish the energy sources and allow management of the power supply of the motors and the consumption, on the basis of working requirements.

More in detail, thanks to the recognition means, the telehandler 1 is able to automatically set up in one of the above-mentioned operating conditions, without the need for the operator to do anything, with obvious advantages in terms of ease of use, productivity, as well as safety, since possible human errors are avoided in advance.

Therefore, if the recognition means verify that there are two batteries on board, it will be possible to manage the respective use as a power supply source for the motors 21, 22, for example it will be possible to modulate the respective current consumption, according to the operating requirements.

If it is found that, in addition to the battery 200, there is an electricity generator apparatus 300 on board, it can be determined when it must intervene to recharge the battery 200.

The telehandler 1 according to the invention is equipped with control means which can be used by an operator, designed for controlling the energy sources 200, 300 on board the vehicle 1. More in detail, the control means may form part of the commands in the cabin and include one or more displays.

The control means are equipped with a plurality of management configurations, which are set by the control unit (or other processing unit), as a function of which energy sources 200, 300 are present in the compartments.

In more detail, the above-mentioned display unit is configured to show different specific interfaces for respective different energy sources 200, 300, depending on the management configuration established by the processing unit.

In practice, based on the energy sources 200, 300 which are on board the vehicle 1 and which have been identified, the display will show specific control parameters, such as the percentage of residual charge for the batteries 200 or the level of fuel for the electricity generator apparatus 300. Moreover, preferably, by means of the display or other control, the operator can establish when to activate the electricity generator apparatus 300 or how to modulate the drawing of current from the battery 200 or whether to select a maximum consumption level according to work and energy saving requirements.

The recognition means preferably comprise a processing unit designed to receive a signal identifying the energy source. In this case, the processing unit comprises an recognition module designed to recognise the energy source on the basis of the signal received.

Generally speaking, it should be noted that, in this description, the processing unit is presented as divided into separate functional modules for the purpose of describing the functions clearly and completely.

In practice, the processing unit may consist of a single electronic device, also of the type commonly present on this type of machine, such as, for example, the control unit, suitably programmed to perform the functions described; the various modules can correspond to hardware units and/or software forming part of the programmed device.

Alternatively or in addition, the functions can be performed by a plurality of electronic devices on which the above-mentioned functional modules can be distributed.

Generally speaking, the processing unit may have one or more microprocessors or microcontrollers for execution of the instructions contained in the memory modules and the above-mentioned functional modules may also be distributed on a plurality of local or remote calculators based on the architecture of the network in which they reside.

The above-mentioned identification signal may be transmitted to the processing unit by communication means which connect it to the compartments, which may, for example, be of the CAN-bus type.

In one particular case, each energy source includes identification means designed to operate in conjunction with the processing unit to automatically verify whether a battery 200 or an electricity generator apparatus 300 is present in the seat.

These identification means may comprise a control device in which at least one parameter identifying the energy source is recorded. In this case, the battery 200 or the electricity generator apparatus 300 include an internal management logic connected to a relative connector 202, 302 by which they can send signals which identify the energy source and, optionally, also the serial number of the specific device which constitutes the energy source. In this case, there may be two identification parameters, one of which for identifying the type of source and one for identifying the specific device, or one which comprises both the items of information.

Therefore, by means of a connection element 111 located inside the compartment 100, for example an internal connector, a connection cable, a logic port or other element, the control device integrated with the battery 200 and the electricity generator apparatus 300 is designed to connect with the CAN-bus network of the telehandler 1, or other communication means, to send to the processing unit an identification signal as a function of said identification parameter(s), as well as obviously allowing the transmission of electric current.

If the identification signal is transmitted by a connection element 111 consisting of the cable for the electrical connection between the battery 200 and the electrical system of the machine, it is possible that the element 111 includes a pin designed for transmitting the signal.

In any case, once the battery 200 or the electricity generator apparatus 300 has been inserted in the compartment 100, it will be sufficient to connect it to the connection element 111 and the processing unit will automatically recognise the type of source and prepare the display with the specific interface and, more generally, the control means in the suitable configuration. Moreover, by means of the internal electrical system of the telehandler 1, a module for powering the processing unit will allow the power supply of current from the recognised and connected source; if the recognised source is a battery 200, the current will be supplied to the motor or the motors and, if, on the other hand, the source is an electricity generator apparatus 300 it will supply current to the battery 200.

It should be noted that, in general, the electrical system which connects the battery 200 to the motors and the electricity generator apparatus 300 to the battery 200, includes all the usual electrical and electronic devices for the operation of motors and other user devices, such as inverters positioned upstream of the motors 21, 22, units for distributing the power supply downstream of the batteries 200 (typically one for each battery), onboard chargers for charging the batteries 200 by means of an external socket (to be used if there is a power supply source close to the work site, for example a column for recharging the batteries) and the various circuits for the lighting of the flashing warning lights and reflectors, internal lighting, etc.

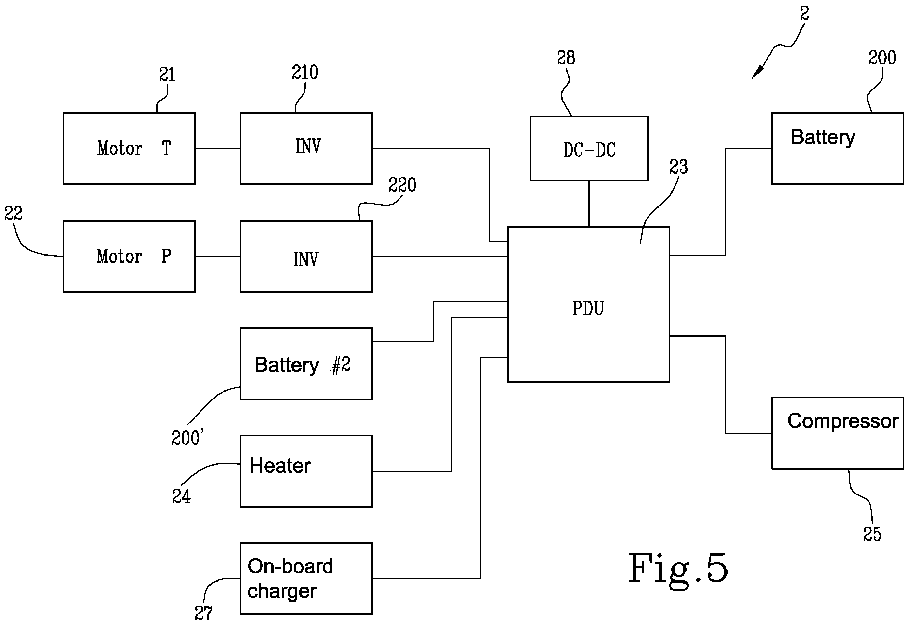

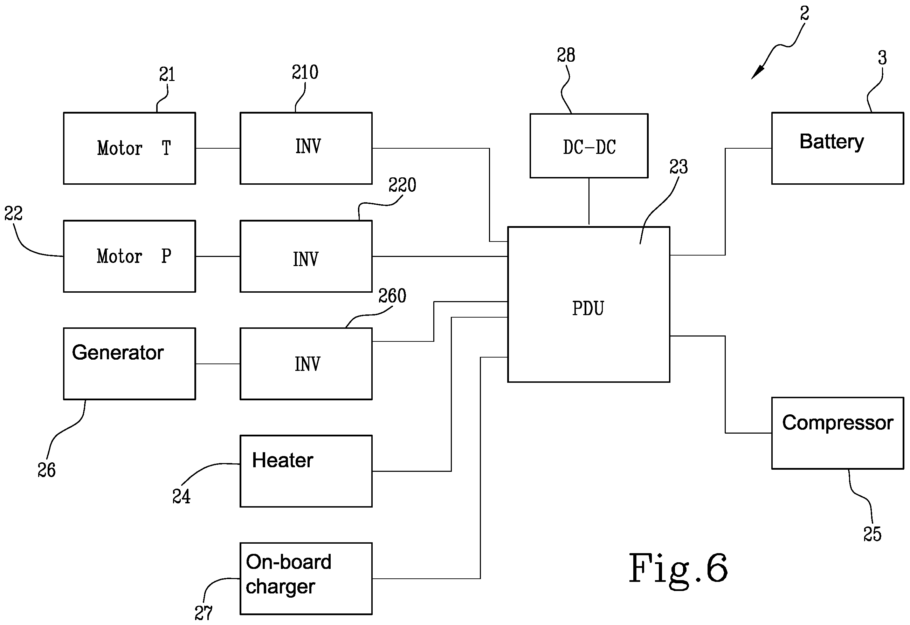

More specifically, the above-mentioned electrical system may comprise a high voltage system 2, shown in Figures 5 and 6, which connects firstly one or more of the electric motors 21, 22.

Preferably, the high voltage system 2 includes a power distribution unit 23 ("PDU") which connects the battery 200 to the motor 21, 22 (or to the motors) and other electronic devices powered by the system. More in detail, the system 2 connects the distribution unit 23 to the inverters 21 0, 220 which drive the motors 21, 22.

The high voltage system 2 can include one or more of the following electronic devices: a climate control system of the cab of the telehandler 1, that is, the heater 24 and the compressor for the air conditioning 25, an onboard electric charger 27, for charging the battery 200 (or the batteries) using the national electricity network (or other similar sources). The above list is not necessarily exhaustive. Preferably, the high voltage system 2 of the telehandler 1 is connected to all the above-mentioned electronic devices. In still more detail, the various above-mentioned electronic devices are connected directly to the above-mentioned distribution unit 23. Further, the overall electrical system also comprises a low voltage system, connected to the high voltage system by means of a DC-DC converter 28 which may be connected to the distribution unit 23 and is used to power the lights, the dashboard, the start-up, the wiper blades and various accessories inside or outside the cab.

Figures 5 and 6 show the use of the high voltage electrical system 2 in two configurations of use.

According to the first configuration of use shown in Figure 6, a second battery 200 is connected to the system, connected directly to the distribution unit 23. In this case, the second battery 200 is used to power the various powered electronic devices, such as the heater 24 and the compressor for the air conditioning 25 and it is also used to power the electric motors 21, 22, alternatively or together with the other battery 200 present in the telehandler 1. The two batteries 200 can be charged by connecting the onboard charger 27 to the national electricity network.

According to the second configuration of use shown in Figure 7, the generator 25 is connected to the high voltage electrical system 2 and is connected to the distribution unit 23 by means of a respective inverter 260. According to this configuration, the battery 200 on board the machine 1 can be powered by the generator 26.

There is also the configuration of use of the high voltage system 2 wherein it is connected to a single battery 200 and one of the compartments is without energy sources.

The high voltage system 2 is preferably set up to alternately pick up current from the battery or batteries 200 and to charge the battery or batteries 220, as a function of an energy balance of the system.

More specifically, in addition to the battery or batteries 200, the high voltage system 2 connects a plurality of passive user devices and one or more active user devices, some of which may be both passive and active.

The passive user devices connectable through the system 2 may be one or more among: motor(s) 21, 22, heater 24 and compressor for the air conditioning 25. The active user devices connectable to the system 2 in question may be the translation motor 21 and/or the generator 26 or possibly another device. More in detail, the translation motor 21 may be equipped with a regenerative braking system.

Said energy balance is determined instantaneously by the result of the sum of the energy supplied by the active user devices minus the sum of the energy required by the passive user devices. If the balance is positive, then the battery 200 (or batteries) is recharged while if the balance is negative, current is drawn from the battery or batteries.

The balance may be determined by a measurement of the instantaneous current in a bus of the high voltage system 2.

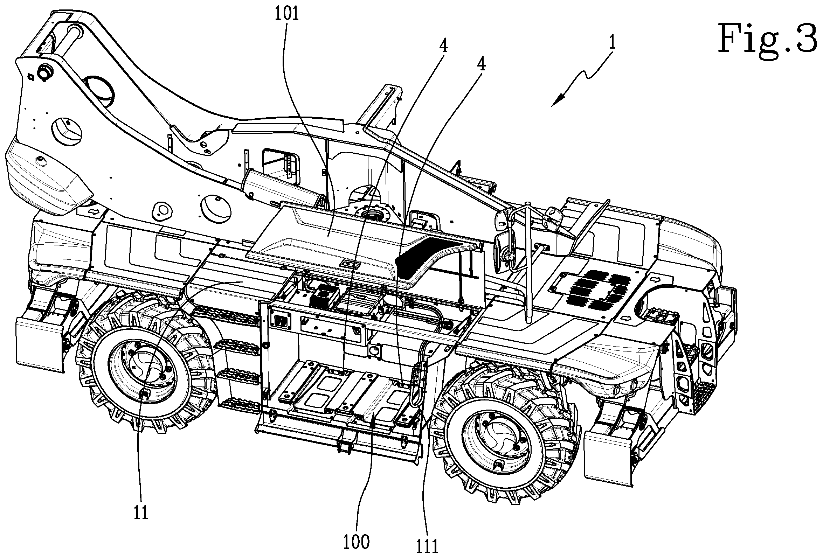

According to a particular version of the invention, shown in Figure 3, inside the compartments there is at least one identification sensor 4, such as, for example, a microswitch or a proximity sensor, designed to detect the type of source 200, 300 housed and produce the above-mentioned identification signal as a function of the detection performed.

According to a particular example, there may be two or more identification sensors 4 in the compartment 100 and each type of energy source 200, 300 has a configuration such as to activate only one or in any case a sub-set of the switches 4 different from that activated by a different source.

In practice, if a battery 200 is inserted in the compartment 100, then the sensor or the sensors 4 which are activated and send the identification signal to the processing unit are different from those which are activated by the generator or other electricity generator apparatus 300 and this allows the processing unit to determine which source is housed in the compartment 100.

According to a particular embodiment of the invention, the two compartments are provided with respective connection elements 111, consisting of electrical connectors, each equipped with a pin in which there is a voltage different from that of the other element. For example, one of the connectors 111 can have a 24 V pin and the other can have a 0 V pin. Each battery 200 has a management system (BMS, that is, "Battery Management System") which is able to measure the voltage of the pin set up for consequently transmitting identification signals as a function of the measurement. For this reason, when two batteries 200 are inserted in respective compartments and connected to the respective connectors 111, their management systems measure the voltage of that pin and send identification signals to the processing unit which is therefore able to distinguish the battery 200 located in one compartment from that located in the other, for the purpose of their management. For example, thanks to this feature, the operator can select whether to power the motors 21, 22 and other user devices using the battery located in the compartment on the right relative to the direction of advance the telehandler 1 or that located in the compartment on the left or both.

Preferably, the batteries 200 and the electricity generator apparatuses 300 which can be replaced according to the invention are equipped, at the lower side, with insertion seats 201, 301 for receiving the prongs of a loading fork, to allow the movement by means of a forklift truck. In other words, the battery 200 and the electricity generator apparatus 300 may have a bottom which defines or consists of or is fixed to a base shaped like a pallet, for the purpose of inserting forks and the movement with a customary forklift truck. In this case, the replacement occurs by opening the door 101, placing forks beneath the battery 200 or the electricity generator apparatus 300, after electrical disconnection and extracting it from the compartment 100; subsequently, after placing forks beneath another battery 200 or another electricity generator apparatus 300, moving it to the height of the opening and then inserting it by sliding on the guide means 103, 104, examples of which are described in more detail below.

## Claims

1. A telehandler (1) equipped with at least one electric motor and several seats (100) for housing energy sources (200, 300) on board the telehandler (1);
wherein at least one electric battery (200) is provided for powering said motor designed to be housed in at least one of the seats (100); and
wherein at least one electricity generator apparatus (300) is provided designed to be housed in at least one of the seats (100);
the telehandler (1) comprising recognition means configured for automatically recognising whether a battery (200) or an electricity generator apparatus (300) is present in a seat (100).

2. The telehandler (1) according to the preceding claim, wherein said recognition means comprise a processing unit designed for receiving a signal identifying the energy source (200, 300) and comprising a recognition module designed for recognising the energy source on the basis of the signal received.

3. The telehandler (1) according to the preceding claim, wherein the recognition means comprise communication means which connect the seats (100) with the processing unit, which are designed for transmitting said identification signal.

4. The telehandler (1) according to the preceding claim, wherein said communication means are of the CAN-bus type.

5. The telehandler (1) according to any preceding claim, wherein each energy source (200, 300) includes identification means designed for operating in conjunction with said recognition means for allowing recognition of whether there is a battery (200) or an electricity generator apparatus (300) in the seat (100).

6. The telehandler (1) according to the preceding claim, wherein said identification means comprise a control device in which an identification parameter of the energy source is recorded.

7. The telehandler (1) according to claim 3 and claim 6, wherein said control device is designed for connecting with said communication means for sending to the processing unit an identification signal as a function of said identification parameter.

8. The telehandler (1) according to any preceding claim, wherein each seat is associated with at least one identification sensor (4) designed for detecting the type of source housed and for producing an identification signal as a function of the detection performed.

9. The telehandler (1) according to the preceding claim, wherein said sensor (4) is a microswitch.

10. The telehandler (1) according to claim 8, wherein said sensor (4) is a proximity sensor.

11. The telehandler (1) according to any one of claims 2 to 10, comprising an electrical system which connects the seats (100) and the electric motor to each other, wherein said processing unit comprises a power supply module configured for allowing by means of said system current to be supplied to the motor from the source housed in a seat (100) when this is recognised to be a battery (200) and for allowing by means of the system current to be supplied to a battery (200) from a source housed in a seat when it is recognised to be an electricity generator apparatus (300).

12. The telehandler (1) according to any one of claims 2 to 11, comprising control means which can be used by an operator and equipped with a plurality of management configurations, wherein said processing unit comprises a selection module configured for switching the management configuration of the control means as a function of which energy sources (200, 300) are housed in the seats.

13. The telehandler (1) according to the preceding claim, wherein the control means comprise a display configured for showing different specific interfaces for respective different energy sources (200, 300), as a function of the management configuration established by the processing unit.

14. The telehandler (1) according to any one of the preceding claims, wherein each seat is defined by a containment compartment (100) for housing an energy source.

15. The telehandler (1) according to the preceding claim, comprising a carriage (11) movable on wheels, wherein the compartments (100) are made in said carriage (11), with the access opening positioned on a side of the carriage (11).
